# FASCICULE DE BREVET EUROPEEN

(11) **EP 1 170 167 B1**
(45) Date de publication et mention de la délivrance du brevet: **12.01.2005**
(21) Numéro de dépôt: 01401529.1
(22) Date de dépôt: 13.06.2001
(51) Int. Cl.: B60N 2/02, B64D 11/06

(54) **Siège pour avion à repose jambes et repose pieds réglables**
Flugzeugsitz mit verstellbaren Bein- und Fussstütze
Airplane seat with adjustable legs support and feet rest

(30) Priorité: 05.07.2000 FR 0008766
(43) Date de publication de la demande: 09.01.2002
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Menard, François, 36100 Issoudun (FR)
(74) Mandataire: Keib, Gérard

(56) Documents cités:
- EP-A- 0 869 061
- WO-A-01/40013
- WO-A-97/42050
- US-A- 5 352 020
- US-A- 5 887 949

## Description

L'invention concerne un siège pour avion comprenant des moyens de commande pour commander simultanément le mouvement du repose jambes et du repose pieds.

On connaît déjà des sièges pour avion selon le préambule de la revendication indépendante, dans lesquels le repose jambes et le repose pieds sont commandés simultanément.

La demanderesse commercialise depuis 1990 sous la dénomination « goldwing » un siège comprenant des moyens de commande pour faire pivoter le repose jambes entre les deux positions définies ci-dessus et simultanément commander la sortie progressive du repose pieds selon une cinématique prédéterminée de telle sorte que le repose pieds ne touche pas le sol.

Dans ce siège, un moteur électrique est disposé entre l'assise et le repose jambes apte à commander le déplacement de ce dernier. Le repose jambes et le repose pieds sont reliés par une liaison mécanique.

Le moteur électrique commande le pivotement du repose jambes fixé de façon articulée à l'assise du siège entre une position sensiblement verticale et une position située sensiblement dans le prolongement de l'assise.

La liaison mécanique entre le repose jambes et le repose pieds est telle que lors du pivotement du repose jambes, le repose pieds se déplace entre une position rétractée et une position d'extension située dans le prolongement du repose jambes, la sortie progressive du repose pieds se produisant selon une cinématique prédéterminée de telle sorte que le repose pieds ne touche pas le sol.

Ce dispositif présente toutefois l'inconvénient de ne pas permettre de régler la longueur d'extension du repose pieds indépendamment de la position du repose jambes. Il en résulte une situation d'inconfort de l'utilisateur qui ne peut ajuster le repose pieds à sa taille.

Le brevet US 5 352 020 décrit un siège pour avion comportant un repose jambes et un repose pieds commandés indépendamment l'un de l'autre.

Toutefois, le dispositif de commande décrit dans ce document ne permet pas d'empêcher le repose pieds de toucher le sol. Seules des roulettes sont prévu pour éviter que le repose pieds ne subisse des dommages.

Les brevets US 5 887 949 et EP 774 913 décrivent un siège comportant un repose jambes et un repose pieds, l'extension du repose pieds étant réglable indépendamment du repose jambes. Des moyens de contrôle du repose jambe et du repose pieds permettent d'éviter au repose pieds de toucher le sol.

A cet effet, les brevets US 5 887 949 et EP 774 913 décrivent un siège comportant deux moteurs électriques de commande du repose jambes et du repose pieds.

Des capteurs sont associés à ces moteurs et sont reliés à une unité centrale qui détermine à partir des données des capteurs les positions instantanées du repose jambes et du repose pieds.

En fonction des positions déterminées, l'unité centrale commande le déplacement du repose jambes ou du repose pieds ou le refuse au cas où le repose pieds risque de toucher le sol.

Toutefois, ce dispositif présente l'inconvénient de nécessiter de nombreux capteurs et un système complexe de contrôle de la position du repose pieds.

On connaît également, du document EP 1 233 880 (correspondant à WO-A-01/40013 et formant part de l'état de la technique suivant l'article 54(3) CBE), un système de gestion des mouvements limites modifiables des éléments d'un siège de véhicule qui comprend un dossier, une assise, un repose-jambes et un repose-pieds. Toutefois, un tel système ne prévoit pas la possibilité pour l'utilisateur de régler le repose-jambes et le repose-pieds chacun au moyen d'un bouton distinct, ce réglage répondant à des principes de cinématique prédéterminée destinés à assurer un confort optimal pour l'utilisateur.

L'invention a pour but de réaliser un siège pour *avion ne présentant pas les* inconvénients des sièges existants.

A cet effet, l'invention, qui est définie dans la revendication indépendante, concerne un siège notamment pour avion comprenant:
- une assise,
- un dossier fixé de façon articulée à la structure du siège de façon à pouvoir régler son inclinaison,
- un repose jambes fixé de façon articulée à la structure du siège de façon pouvoir régler son inclinaison entre une position sensiblement verticale et une position située sensiblement dans le prolongement de l'assise,
- un repose pieds porté par ledit repose jambes, mobile entre une position rétractée et une position d'extension située dans le prolongement du repose jambes,
- des moyens de commande pour faire pivoter le repose jambes entre les deux positions définies ci-dessus et simultanément commander la sortie progressive du repose pieds selon une cinématique prédéterminée de telle sorte que le repose pieds ne touche pas le sol.

Lesdits moyens de commande sont constitués par un circuit électronique coopérant avec des actionneurs pour faire pivoter le repose jambes et simultanément assurer la sortie progressive ou la rentrée du repose pieds, ledit circuit électronique coopérant en outre avec des moyens pouvant être actionnés par l'utilisateur pour régler la position du repose pieds entre une position d'extension maximale correspondant à ladite cinématique prédéterminée de sortie du repose pieds et la position totalement rétractée.

Lesdits moyens de commande comportent un boîtier de commande comprenant au moins un bouton permettant de commander le pivotement du repose jambes et au moins un bouton permettant de commander le réglage de l'extension du repose pieds.

Ces boutons permettent l'une et/ou l'autre des commandes décrites ci-après.

Ledit bouton permettant de commander le réglage de l'extension du repose pieds commande simultanément le pivotement du repose jambes lorsque ce dernier est dans ladite position sensiblement verticale, suivant ladite cinématique déterminée.

Ledit bouton permettant de commander le pivotement du repose jambes entre une position proche de ladite position située sensiblement dans le prolongement de l'assise et une position proche de ladite position sensiblement verticale, commande simultanément la rentrée ou la sortie du repose pieds, ce dernier se trouvant dans une position quelconque entre sa position d'extension maximale et sa position totalement rétractée.

De même que le précédent siège de la demanderesse décrit ci-dessus, le siège selon l'invention comporte donc un repose jambes et un repose pieds dont la cinématique est prédéterminée.

En revanche, il présente l'avantage de permettre le réglage du repose pieds indépendamment du repose jambes.

Le dispositif décrit dans l'invention présente également les avantages suivants :
- le problème du repose pieds touchant le sol ne se pose pas, la cinématique imposée évitant le sol,
- il ne nécessite pas la détermination instantanée des positions du repose jambes et du repose pieds pour éviter que ce dernier ne touche le sol.

Dans une variante, ledit circuit électronique coopère avec lesdits moyens pouvant être actionnés par l'utilisateur pour régler la position du repose pieds indépendamment du repose jambes lorsque ledit repose jambes est immobile.

Le siège peut comprendre en outre les caractéristiques suivantes seules ou en combinaison.

Le circuit électronique comprend une unité centrale de gestion de la cinématique du repose jambes et du repose pieds.

Le siège suivant l'invention comprend un premier moteur pour commander le déplacement du repose jambes placé entre l'assise et le repose jambes et un second moteur pour commander le déplacement du repose pieds placé entre le repose jambes et le repose pieds.

D'autres particularités et avantages de l'invention apparaîtront encore dans la description ci-après.

Aux dessins annexés donnés à titre d'exemples non limitatifs :
- la figure 1 est un schéma fonctionnel du siège selon l'invention ;
- la figure 2 représente schématiquement plusieurs chemins possibles suivi par le repose jambes et le repose pieds.

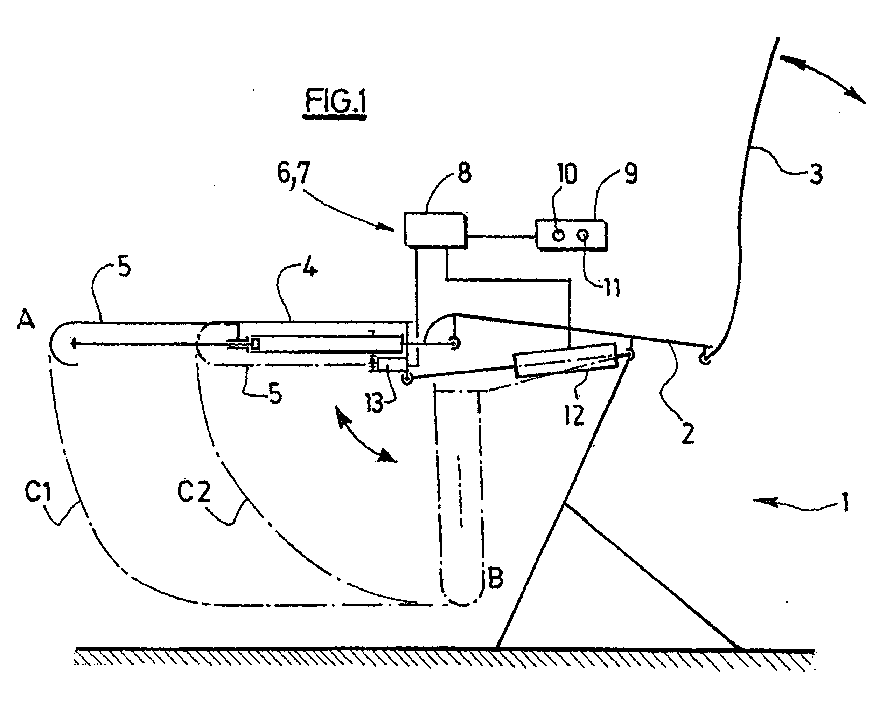

Sur la figure 1 est représenté un siège 1, notamment pour avion, comprenant :
- une assise 2,
- un dossier 3 fixé de façon articulée à la structure du siège de façon à pouvoir régler son inclinaison,
- un repose jambes 4 fixé de façon articulée à la structure du siège de façon à pouvoir régler son inclinaison,
- un repose pieds 5 mobile porté par le repose jambes 4.

L'inclinaison du repose jambes 4 peut être réglée entre une position A sensiblement verticale représentée en traits discontinus sur la figure 1 et une position B située sensiblement dans le prolongement de l'assise 2, représentée en traits continus sur la figure 1.

Le repose pieds 5 est monté coulissant dans le repose jambes 4. Il est mobile entre une position rétractée, lorsque le repose jambes 4 est dans la position B définie ci-dessus, et une position d'extension située dans le prolongement du repose jambes 4, tel que, par exemple, dans la position A du repose jambes 4.

Ledit siège 1 comprend des moyens de commande 6 pour faire pivoter le repose jambes 4 entre les deux positions A et B définies ci-dessus et simultanément commander la sortie ou la rentrée progressive du repose pieds 5 selon une cinématique prédéterminée de telle sorte que le repose pieds ne touche pas le sol.

Lesdits moyens de commande 6 sont constitués notamment par un circuit électronique 7.

Le circuit électronique 7 comprend une unité centrale 8 de gestion de la cinématique du repose jambes 4 et du repose pieds 5.

L'unité centrale comprend un ou plusieurs microprocesseurs qui commande les actionneurs et gère cette cinématique d'une façon connue de l'homme du métier.

Le fonctionnement de l'unité centrale n'est donc pas décrite plus en détail.

Lesdits moyens de commande 6 comportent également un boîtier 9 de commande comprenant au moins un bouton 10 permettant de commander le pivotement du repose jambes 4 et au moins un bouton 11 permettant de commander le réglage de l'extension du repose pieds 5.

Le siège comprend un premier moteur 12 pour commander le déplacement du repose jambes 4. Ce moteur est placé entre l'assise 2 et le repose jambes 4.

Un second moteur 13, placé entre le repose jambes 4 et le repose pieds 5 commande le déplacement du repose pieds 5 par rapport au repose jambes 4.

Les moteurs 12, 13 sont connectés à l'unité centrale 8 par l'intermédiaire d'un circuit électrique. Un autre circuit électrique relie l'unité centrale 8 aux boutons 10, 11 du boîtier de commande.

Le circuit électronique 7 coopère avec des actionneurs tels que les moteurs 12 et 13 pour faire pivoter le repose jambes 4 et simultanément assurer la sortie ou la rentrée progressive du repose pieds 5.

Par ailleurs, ledit circuit électronique 7 coopère avec des moyens, tels que le moteur 13, pouvant être actionnés par l'utilisateur, par exemple au moyen du bouton 11, pour régler la position du repose pieds entre une position d'extension maximale correspondant à ladite cinématique prédéterminée de sortie du repose pieds et la position totalement rétractée.

Dans un mode de réalisation, ledit circuit électronique 7 coopère avec lesdits moyens pouvant être actionnés par l'utilisateur pour régler la position du repose pieds indépendamment du repose jambes lorsque ledit repose jambes est immobile.

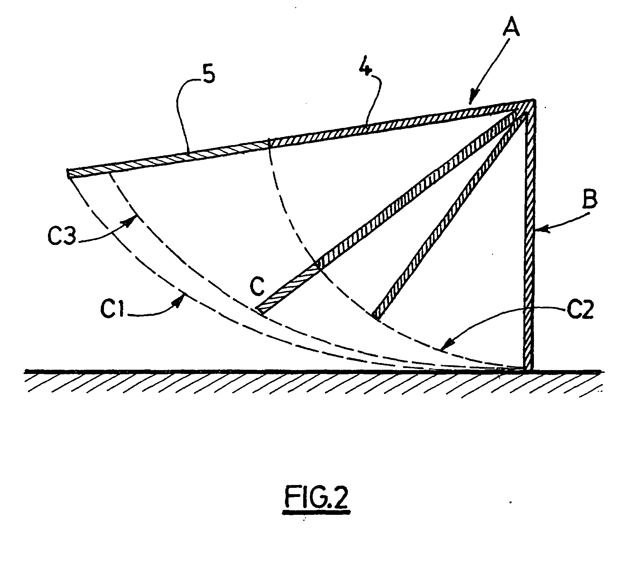

Le fonctionnement du siège 1, et plus précisément du repose jambes 4 et du repose pieds 5, est maintenant décrit en détail en référence à la figure 2. Le mouvement des repose jambes 4 et repose pieds 5 est d'abord décrit au cours de leur passage de la position sensiblement verticale B à la position sensiblement horizontale A.

Lorsque l'utilisateur actionne le bouton 10 commandant le repose jambes 4, ce dernier pivote à partir de ladite position B et, simultanément, le repose pieds 5 s'étend de manière à suivre une courbe cinématique déterminée C1 identique à celle suivie par les mêmes éléments dans le siège « goldwing ».

Cette courbe cinématique déterminée C1 est représentée sur la figure 2. Elle correspond à la courbe d'extension maximale du repose pieds 5.

Le déplacement du repose jambes 4 et du repose pieds 5 s'arrête lorsque le repose jambes 4 a atteint la position A, ou lorsque l'utilisateur cesse d'actionner le bouton 10.

Lorsque le repose jambes 4 est dans une position où le repose pieds 5 est complètement rétracté, si l'utilisateur actionne le bouton 11, qui permet de commander le réglage de l'extension du repose pieds 5, alors, le bouton 11 commande simultanément le pivotement du repose jambes 4 et la sortie du repose pieds 5, de sorte que le repose jambes et le repose pieds suivent la courbe C1.

A partir du moment où le repose jambes 4 est dans une position où le repose pieds 5 est sorti, le bouton 11 permet de commander le réglage de la sortie du repose pieds 5 entre une position rétractée, représentée par la courbe C2 sur la figure 2, et la position maximale de sortie, représentée par la courbe C1, indépendamment du repose jambes 4.

Lorsque le repose jambes 4 et le repose pieds 5 sont dans une position intermédiaire C représentée sur la figure 2, alors l'actionnement du bouton 10 commande simultanément le repose jambes et le repose pieds suivant une courbe C3 intermédiaire entre les courbes limites C1 et C2.

De façon similaire, lorsque le repose jambes 4 est dans la position A sensiblement horizontale, l'actionnement du bouton 10 commande simultanément le repose jambes et le repose pieds suivant la courbe C1 ou C2 ou suivant l'une des courbes intermédiaires comprises entre ces deux courbes.

Dans un autre mode de réalisation, le passage de la position B à la position A, ou d'une position intermédiaire C à la position A, se fait uniquement en suivant la courbe C1 en actionnant le bouton 10.

Les courbes intermédiaires C3 entre les deux courbes C1 et C2 ne sont alors suivies que lors du passage du repose jambes 4 de la position A (ou d'une position intermédiaire C) à la position B, toujours en actionnant le bouton 10.

Bien entendu, l'invention n'est pas limitée au mode de réalisation qui vient d'être décrit.

Les boutons de commande 10, 11 peuvent par exemple être remplacés par un ou plusieurs boutons ou manettes.

On peut par ailleurs prévoir l'utilisation de capteurs associés aux moteurs 12, 13 comme moyens de sécurité pour contrôler le déplacement du repose jambes 4 et du repose pieds 5.

## Revendications

1. Siège (1) notamment pour avion comprenant une assise (2), un dossier (3) fixé de façon articulée à la structure du siège de façon à pouvoir régler son inclinaison, un repose jambes (4) fixé de façon articulée à la structure du siège de façon à pouvoir régler son inclinaison entre une position (B) sensiblement verticale et une position (A) située sensiblement dans le prolongement de l'assise (2), ce repose jambes (4) portant un repose pieds (5) mobile entre une position rétractée et une position d'extension située dans le prolongement du repose jambes, ledit siège (1) comprenant des moyens de commande (6) pour faire pivoter le repose jambes (4) entre les deux positions définies ci-dessus et simultanément commander la sortie ou la rentrée progressive du repose pieds (5) selon une cinématique prédéterminée de telle sorte que le repose pieds (5) ne touche pas le sol, lesdits moyens de commande (6) étant constitués par un circuit électronique (7) coopérant avec des actionneurs pour faire pivoter le repose jambes (4) et simultanément assurer la sortie ou la rentrée progressive du repose pieds (5), ledit circuit électronique (7) coopérant en outre avec des moyens pouvant être actionnés par l'utilisateur pour régler la position du repose pieds (5) entre une position d'extension maximale correspondant à ladite cinématique prédéterminée de sortie du repose pieds (5) et la position totalement rétractée, **caractérisé en ce que** lesdits moyens de commande (6) comportent un boîtier de commande (9) comprenant au moins un bouton (10) permettant de commander le pivotement du repose jambes (4) et au moins un bouton (11) permettant de commander le réglage de l'extension du repose pieds (5), **en ce que** ledit bouton (11) permettant de commander le réglage de l'extension du repose pieds (5) commandé simultanément le pivotement du repose jambes (4) lorsque ce dernier est dans ladite position (B) sensiblement verticale, suivant ladite cinématique déterminée, et **en ce que** ledit bouton (10) permettant de commander le pivotement du repose jambes (4) entre une position proche de ladite position située sensiblement dans le prolongement de l'assise et une position proche de ladite position sensiblement verticale, commande simultanément la rentrée ou la sortie du repose pieds (5), ce dernier se trouvant dans une position quelconque entre sa position d'extension maximale et sa position totalement rétractée

2. Siège selon la revendication 1, **caractérisé en ce que** ledit circuit électronique (7) coopère avec lesdits moyens pouvant être actionnés par l'utilisateur pour régler la position du repose pieds (5) indépendamment du repose jambes (4) lorsque ledit repose jambes est immobile.

3. Siège selon l'une des revendications 1 ou 2, **caractérisé en ce que** le circuit électronique (7) comprend une unité centrale (8) de gestion de la cinématique du repose jambes (4) et du repose pieds (5).

4. Siège selon l'une des revendications 1 à 3, **caractérisé en ce qu'**il comprend un premier moteur (12) pour commander le déplacement du repose jambes (4) placé entre l'assise (2) et le repose jambes (4) et un second moteur (13) pour commander le déplacement du repose pieds (5) placé entre le repose jambes (4) et le repose pieds (5).

## Patentansprüche

1. Sitz (1), insbesondere für ein Flugzeug, mit einer Sitzfläche (2), einer Rückenlehne (3), die gelenkig an der Struktur des Sitzes befestigt ist, um ihre Schrägstellung einstellen zu können, und einer Beinstütze (4), die gelenkig an der Struktur des Sitzes befestigt ist, um ihre Schrägstellung zwischen einer etwa vertikalen Position (B) und einer sich etwa in der Verlängerung der Sitzfläche (2) befindlichen Position (A) einstellen zu können, wobei diese Beinstütze (4) eine Fußstütze (5) trägt, die zwischen einer eingezogenen Position und einer in der Verlängerung der Beinstütze ausgezogenen Position mobil ist, wobei der besagte Sitz (1) Steuermittel (6) umfasst, um die Beinstütze (4) zwischen den beiden oben genannten Positionen zu drehen und gleichzeitig das progressive Ein- oder Ausfahren der Fußstütze (5) nach einer vorgegebenen Kinematik zu steuern, so dass die Fußstütze (5) nicht den Boden berührt, wobei die besagten Steuermittel (6) aus einer elektronischen Schaltung (7) bestehen, die mit Schaltelementen zusammenwirkt, um die Beinstütze (4) zu drehen und gleichzeitig das progressive Aus- oder Einfahren der Fußstütze (5) zu gewährleisten, wobei die besagte elektronische Schaltung (7) ferner mit Mitteln zusammenwirkt, die vom Benutzer betätigt werden können, um die Position der Fußstütze (5) zwischen einer maximalen ausgefahrenen Position, die der besagten vorgegebenen Extensionskinematik der Fußstütze (5) entspricht, und der komplett eingefahrenen Position einzustellen, **dadurch gekennzeichnet, dass** die besagten Steuermittel (6) einen Steuerkasten (9) umfassen, mit mindestens einem Knopf (10) zur Steuerung der Drehung der Beinstütze (4) und mindestens einem Knopf (11) zur Steuerung der Einstellung der Extension der Fußstütze (5), dass der besagte Knopf (11) zur Steuerung der Einstellung der Extension der Fußstütze (5) gleichzeitig das Drehen der Beinstütze (4) steuert, wenn sich letztere in der besagten etwa vertikalen Position (B) befindet, gemäß der besagten vorgegebenen Kinematik, und dass der besagte Knopf (10) für die Steuerung des Drehens der Beinstütze (4) zwischen einer Position nahe der besagten, sich etwa in der Verlängerung der Sitzfläche befindlichen Position und einer Position nahe der besagten etwa vertikalen Position befindlichen Position, gleichzeitig das Aus- oder Einfahren der Fußstütze (5) steuert, wobei sich letztere in einer beliebigen Position zwischen ihrer maximalen ausgefahrenen Position und ihre komplett eingefahrenen Position befindet.

2. Sitz nach Anspruch 1, **dadurch gekennzeichnet, dass** die besagte elektronische Schaltung (7) mit den besagten Mitteln zusammenwirkt, die vom Benutzer betätigt werden können, um die Position der Fußstütze (5) unabhängig von der Beinstütze (4) einzustellen, wenn die besagte Beinstütze immobil ist.

3. Sitz nach einem der Ansprüche 1 oder 2, **dadurch gekennzeichnet, dass** die elektronische Schaltung (7) eine zentrale Verwaltungseinheit (8) der Kinematik der Beinstütze (4) und der Fußstütze (5) umfasst.

4. Sitz nach einem der Ansprüche 1 bis 3, **dadurch gekennzeichnet, dass** er einen zwischen der Sitzfläche (2) und der Beinstütze (4) angeordneten ersten Motor (12) für die Steuerung der Verschiebung der Beinstütze (4) und einen zwischen der Beinstütze (4) und der Fußstütze (5) angeordneten zweiten Motor (13) für die Steuerung der Verschiebung der Fußstütze (5) umfasst.

## Claims

1. A seat (1) in particular for an airplane, said seat comprising a seat proper (2), a seat back (3) hinged to the structure of the seat so that it is possible to adjust the inclination of the seat back, and a leg rest (4) hinged to the structure of the seat so that it is possible to adjust the inclination of the leg rest between a substantially vertical position (B) and a position (A) situated substantially in alignment with the seat proper (2), said leg rest (4) carrying a foot rest (5) mounted to move between a retracted position and an extension position situated in alignment with the leg rest, said seat (1) further comprising control means (6) for causing the leg rest (4) to pivot between the two above-defined positions and for simultaneously causing the foot rest (5) to retract or to extend progressively with predetermined dynamics such that the foot rest (5) does not touch the floor, said control means (6) being constituted by an electronic circuit (7) co-operating with actuators to cause the leg rest (4) to pivot and simultaneously to cause the foot rest (5) to retract or to extend progressively, said electronic circuit (7) further co-operating with means that can be actuated by the user to adjust the position of the foot rest (5) between a maximum extension position corresponding to said predetermined dynamics for the extension of the foot rest (5) and the fully retracted position, said seat being **characterized in that** said control means (6) comprise a control box (9) having at least one button (10) making it possible to cause the leg rest (4) to pivot, and at least one button (11) making it possible to adjust the extension of the foot rest (5), **in that** said button (11) making it possible to adjust the extension of the foot rest (5) simultaneously causes the leg rest (4) to pivot when said leg rest is in said substantially vertical position (B), with said determined dynamics, and **in that** said button (10) making it possible to cause the leg rest (4) to pivot between a position close to said position situated substantially in alignment with the seat proper and a position close to said substantially vertical position simultaneously causes the foot rest (5) to retract or to extend, said foot rest being in any position between its maximum extension position and its fully retracted position.

2. A seat according to claim 1, **characterized in that** said electronic circuit (7) co-operates with said means that can be actuated by the user to adjust the position of the foot rest (5) independently of the leg rest (4) when said leg rest is stationary.

3. A seat according to claim 1 or 2, **characterized in that** the electronic circuit (7) comprises a central processing unit (8) for managing the dynamics of the leg rest (4) and of the foot rest (5).

4. A seat according to any one of claims 1 to 3, **characterized in that** it further comprises a first motor (12) for causing the leg rest (4) to move, which motor is placed between the seat proper (2) and the leg rest (4), and a second motor (13) for causing the foot rest (5) to move, which motor is placed between the leg rest (4) and the foot rest (5).
